# EUROPÄISCHE PATENTANMELDUNG

(11) **EP 1 568 465 A2**
(43) Veröffentlichungstag der Anmeldung: **31.08.2005**
(21) Anmeldenummer: 05004185.4
(22) Anmeldetag: 25.02.2005
(51) Int. Cl.: B29C 47/88, B29C 35/16

(54) **Verfahren und Vorrichtung zum Kühlen von Extrudaten**

(30) Priorität: 28.02.2004 DE 102004009836
(71) Anmelder: Thyssenkrupp Elastomertechnik GmbH, 21079 Hamburg (DE)
(72) Erfinder: Stöhrmann, Andreas, 24616 Sarlhusen (DE); Wedekind, Werner, 21376 Salzhausen (DE)
(74) Vertreter: Klickow, Hans-Henning

(57) **Zusammenfassung**

Das Verfahren und die Vorrichtung dienen zum Kühlen von Extrudaten (16). Das Extrudat (16) wird von mindestens einem Tragelement gestützt durch eine Kühlstrecke transportiert, in deren Bereich Kühlgas in Richtung auf das Extrudat (16) geleitet wird. Das Extrudat (16) wird mindestens bereichsweise durch einen im wesentlichen geschlossenen Kühlraum (15) geführt. Innerhalb des Kühlraumes (15) in Richtung auf das Extrudat (16) geleitetes Kühlgas wird mindestens zum Teil nach einer Kühlung des Extrudats (16) einem wärmetauscher zugeführt, dort erneut gekühlt und anschließend wieder zur Kühlung des Extrudats (16) verwendet. Das Kühlgas strömt durch Kühldüsen (20) in Richtung auf das Extrudat (16) und wird von einer Gasfördereinrichtung vom Wärmetauscher zu den Kühldüsen (20) gefördert.

## Beschreibung

Die Erfindung betrifft ein Verfahren zum Kühlen von Extrudaten, bei dem das Extrudat von mindestens einem Tragelement gestützt durch eine Kühlstrecke transportiert wird und bei dem ein Kühlmedium in Richtung auf das Extrudat geleitet wird.

Die Erfindung betrifft darüber hinaus eine Vorrichtung zum Kühlen von Extrudaten, die mindestens ein das Extrudat stützendes Tragelement aufweist, das durch eine Kühlstrecke geführt ist und bei der im Bereich der Kühlstrecke eine Mehrzahl von Kühldüsen zur Leitung eines Kühlgases in Richtung auf das Extrudat angeordnet sind.

Entsprechende Verfahren und Vorrichtungen werden beispielsweise beim Extrudieren von elastomeren Strängen verwendet, die nach einer geeigneten Konfektionierung zur Herstellung von Reifen verwendet werden.

Gemäß einer bekannten Ausführungsform werden die Extrudate auf einer bandartigen Fördereinrichtung unterhalb von ortsfest installierten Kühldüsen vorbeigeführt. Die Kühldüsen sind an eine zentrale Versorgungseinheit angeschlossen, die einen Luftkühler aufweist. Die bekannten Verfahren und Vorrichtungen verursachen einen erheblichen Energieverbrauch aufgrund der erforderlichen Kühlluftmengen.

Insbesondere bei einem Betrieb der Anlagen in einer Umgebung mit hoher Luftfeuchtigkeit wird ein erheblicher Energieanteil dafür benötigt, die Feuchtigkeit bei einer Unterschreitung des Taupunktes auszukondensieren. Bei den bekannten Verfahren können nur etwa 30 % der eingesetzten Kühlleistungen für die Kühlung des Extrudats verwendet werden, weitere 30 % der eingesetzten Energiemenge entfallen auf die Kondensationswärme der auskondensierenden Feuchtigkeit und die restlichen 40 % der eingesetzten Energiemenge werden durch ungenutzte Kühlluft an die Umgebung abgegeben.

Die obigen Werte beziehen sich auf ein elastomeres Extrudat für die Reifenherstellung, das mit einer Fördermenge von etwa 1700 kg pro Stunde durch die Kühlstrecke gefördert und von etwa 100 °C auf 35 °C heruntergekühlt wird. Der Betrieb erfolgte bei einer Umgebungstemperatur von 30 °C und 80 % Luftfeuchtigkeit sowie einer Kühllufttemperatur von etwa 17 °C.

Aufgabe der vorliegenden Erfindung ist es, ein Verfahren der einleitend genannten Art derart zu verbessern, daß ein verbesserter Wirkungsgrad erreicht wird.

Diese Aufgabe wird erfindungsgemäß dadurch gelöst, daß das Extrudat mindestens bereichsweise durch einen im wesentlichen geschlossenen Kühlraum geleitet wird und daß innerhalb des Kühlraumes in Richtung auf das Extrudat geleitetes Kühlgas mindestens zum Teil nach einer Kühlung des Extrudats einem Wärmetauscher zugeführt, erneut gekühlt und anschließend wieder zur Kühlung des Extrudats verwendet wird.

Weitere Aufgabe der vorliegenden Erfindung ist es, eine Vorrichtung der einleitend genannten Art derart zu konstruieren, daß bei gleicher Kühlleistung die erforderliche Betriebsenergie vermindert wird.

Diese Aufgabe wird erfindungsgemäß dadurch gelöst, daß die Kühlstrecke mindestens bereichsweise innerhalb eines im wesentlichen geschlossenen Kühlraumes angeordnet ist und daß der Kühlraum mit einem Wärmetauscher gekoppelt und mit einer Gasfördereinrichtung versehen ist.

Durch die im wesentlichen geschlossene Ausbildung der Kühlstrecke wird eine Vermischung der Kühlluft mit der Umgebungsluft weitgehend vermieden. Insbesondere ist es nicht erforderlich, permanent frisch zugeführte Umgebungsluft herunterzukühlen und zu entfeuchten. Nach einer Beaufschlagung des Extrudats wird die Kühlluft vielmehr innerhalb eines geschlossenen Systems zurückgeleitet und es braucht lediglich die vom Extrudat an die Kühlluft abgegebene Wärmeenergie abgeleitet zu werden.

Typischerweise weist die Kühlluft auch nach einer Durchführung des Kühlvorganges am Extrudat eine Temperatur auf, die unterhalb der Temperatur der Umgebungsluft liegen kann. In jedem Fall ist der Feuchtigkeitsgehalt der vom Extrudat abströmenden Kühlluft erheblich geringer als der Feuchtigkeitsgehalt der Umgebungsluft, so daß die für das Kondensieren der in der Umgebungsluft enthaltenen Feuchtigkeit erforderliche Kondensationsenergie eingespart werden kann.

Eine gezielte Kühlgaszuführung wird dadurch unterstützt, daß das Kühlgas durch Kühldüsen hindurch in Richtung auf das Extrudat geleitet wird.

Eine besonders hohe Kühlwirkung kann dadurch erreicht werden, daß die Kühldüsen reihenartig angeordnete und im wesentlichen mit einem runden Querschnitt versehene Ausströmöffnungen aufweisen.

Eine hohe Kühlwirkung bei kompakter Anlagenkonstruktion wird dadurch erreicht, daß das Extrudat den Kühlraum mindestens bereichsweise sowohl entlang eines Hinweges als auch entlang eines Rückweges durchläuft.

Insbesondere wird eine kompakte Konstruktion der Gesamtanlage dadurch unterstützt, daß der Hinweg und der Rückweg in lotrechter Richtung mindestens bereichsweise übereinander durchlaufen werden.

Eine weitere Erhöhung der Kühleffektivität kann dadurch erreicht werden, daß das Extrudat mindestens bereichsweise zweiseitig gekühlt wird.

Eine gute zugänglichkeit bei gleichzeitig optimaler Positionierung der Kühldüsen bezüglich der Kühlwirkung kann dadurch erreicht werden, daß mindestens eine der Kühldüsen verschwenkbar innerhalb des Kühlraumes positioniert wird.

Eine hohe Kühlleistung wird auch dadurch unterstützt, daß die Kühldüsen über einen Strömungsweg mit einem Druckerzeuger für das Kühlgas verbunden werden.

Ein optimales Erreichen einer Produktendtemperatur kann dadurch unterstützt werden, daß das Extrudat mindestens bereichsweise im Bereich seiner Oberfläche auf eine Temperatur unterhalb einer vorgesehenen Endtemperatur gekühlt wird und daß die Oberflächentemperatur anschließend durch innerhalb des Extrudats gespeicherte Restwärme wieder angehoben wird.

Eine große Flexibilität zur Anpassung an unterschiedliche zu kühlende Produkte sowie unterschiedliche Umgebungsbedingungen kann dadurch erreicht werden, daß eine Mehrzahl von Kühlmodulen in Transportrichtung des Extrudats hintereinander angeordnet werden.

Eine vorteilhafte Realisierung für den Transport des Extrudats durch das Kühlmodul hindurch besteht darin, daß das Extrudat von einem umlaufenden Tragelement durch den Kühlraum transportiert wird.

Eine zusätzliche Kühlwirkung durch einen Wärmeübergang vom Extrudat an das Tragelement wird dadurch unterstützt, daß ein Rücklaufbereich des Tragelementes mindestens bereichsweise durch Wärmeleitung gekühlt wird.

Das Erreichen einer vorgegebenen Endtemperatur des Extrudats wird dadurch unterstützt, daß eine Temperatur des Extrudats im Bereich mindestens einer Erfassungsstelle gemessen und die Meßwerte einer Regelung zur Vorgabe einer Wärmeübertragungsmenge an das Kühlgut zugeführt werden. Durch die Temperaturregelung kann auch eine Energieeinsparung unterstützt sowie das Erreichen einer reproduzierbaren Kühlguttemperatur gewährleistet werden.

Eine typische Anwendung besteht darin, daß das Extrudat innerhalb einer Anlage zur Gummiextrusion gekühlt wird.

Insbesondere ist daran gedacht, daß das Extrudat innerhalb einer Anlage zur Reifenherstellung gekühlt wird.

Gemäß einer bevorzugten Ausführungsform wird die Temperatur des Extrudats an seiner Oberfläche erfaßt. Die Temperaturerfassung dient dazu, die Temperatur des Extrudats als Regelgröße für prozeßabhängige Parameter, beispielsweise die Temperatur des Kühlmediums, dem Volumenstrom des Kühlmediums sowie die Wärmeübertragungsrate zu verwenden. Durch die Erfassung der Oberflächentemperatur kann der Prozeß derart gesteuert werden, daß die Oberflächentemperatur am Ende der Kühllinie unabhängig vom Material sowie der Profilgeometrie des Extrudats sowie der Liniengeschwindigkeit konstant gehalten wird. Es werden hierdurch konstante und reproduzierbare Prozeßbedingungen geschaffen, durch die Schwankungen im thermischen Schrumpf des Extrudats begrenzt werden.

Besonders bevorzugt ist es, aus der Oberflächentemperatur die Mittentemperatur oder die Mitteltemperatur des Temperaturprofils im Extrudat zu ermitteln. Hierdurch ist es möglich, den Abkühlprozeß so zu steuern, daß die Temperaturen des Extrudats am Ende der Kühllinie konstant sind. Die Mittentemperatur und die Mitteltemperatur sind als Eingangsgrößen der Regelung besonders geeignet, da sie ein Maß für das Temperaturprofil im Extrudat über dessen Querschnitt darstellen. Als weiteres Maß für das Temperaturprofil kann auch eine Differenz zwischen der Oberflächentemperatur und der Mittentemperatur herangezogen werden. Als Maß für die Gleichmäßigkeit des Temperaturprofils im Extrudat kann die Differenz zwischen der Mittentemperatur und der Mitteltemperatur herangezogen werden.

Von besonderer Bedeutung ist, daß die Mittentemperatur nicht im Prozeßdurchlauf gemessen wird, sondern eine berechnete Größe, unter der Verwendung bestimmter Berechnungsalgorithmen darstellt.

Bei einer weiteren bevorzugten Ausführungsform wird in zwei modular aneinandergereihten Kühlmodulen mit einer unterschiedlichen Kühlleistung gearbeitet. Innerhalb der einzelnen Kühlmodule wird die Kühlleistung durch die Kühlmitteltemperatur, den Volumenstrom sowie die Wärmeübertragungsrate geregelt. Durch eine unterschiedliche Kühlleistung in den einzelnen Kühlmodulen ist es möglich, den Wirkungsgrad der Kühlung zu erhöhen. Bei einer gleichen Gesamtkühlleistung kann durch unterschiedliche Kühlleistungsvorgabe in den einzelnen Modulen gegenüber einer konstanten Kühlleistung in allen Modulen eine geringere Endtemperatur des Extrudats bzw. ein verminderter Energieeinsatz für die Kühlung erreicht werden. Die Verbesserungen beziehen sich sowohl auf die Oberflächentemperatur, die Mittentemperatur als auch die Mitteltemperatur. Ebenfalls ist es möglich, in den einzelnen Kühlmodulen unterschiedliche Kühltemperaturen bereitzustellen. Bei einem Einlauf des Extrudats in die Kühlanlage ist aufgrund der relativ großen Temperaturdifferenz eine geringere Kühltemperatur ausreichend, mit zunehmender Abkühlung des Extrudats kann das Extrudat dann mit tieferen Kühltemperaturen beaufschlagt werden.

Gemäß einer weiteren Ausführungsform ist vorgesehen, daß die Kühlleistung in Abhängigkeit von der Querschnittgeometrie des Extrudats geregelt wird. Durch diese Regelung wird ausgenutzt, daß unterschiedliche Profilgeometrien des Extrudats zu unterschiedlichen Massen je spezifischer Länge führen und somit ein unterschiedliches Abkühlverhalten zur Folge haben. Dies resultiert aus partiellen Massenanhäufungen in den jeweiligen Querschnittebenen. Zur Berücksichtigung der unterschiedlichen Profilgeometrien erfolgt eine Regelung auf die Oberflächentemperatur und eine errechnete Größe auf eine mittlere Querschnittemperatur.

Die Erfassung erfolgt zweckmäßiger Weise an einer repräsentativen Stelle des Profilquerschnitts, vorzugsweise einer repräsentativen Dicke.

Hintergrund ist, dass an dieser Stelle die Mitten sowie die Mitteltemperatur ihr Maximum aufweist, welches am Ende der Kühlstrecke unterhalb eines vorgegebenen Grenzwertes typischerweise 35 °C, liegen soll, wobei bei einem Überschreiten des Grenzwertes die Gefahr eines Anvulkanisierens (Scorch) vom Produkt besteht. Anvulkanisierte Stellen verhindern wiederum, dass das Halbzeug in den anschließenden Prozessschritten weiterverarbeitet werden kann und führen somit zu Ausschuss.

Gemäß einer weiteren Ausführungsform wird die Kühlleistung abhängig von Materialeigenschaften des Extrudats geregelt. Sowohl die Materialeigenschaften als auch die Materialdicke beeinflussen die Abkühlgeschwindigkeit sowie das Temperaturprofil im Extrudatquerschnitt. Zur Erfassung der Materialeigenschaften können die Wärmekapazität, die Wärmeleitfähigkeit sowie die Dichte des Extrudats herangezogen werden.

Eine weitere Verbesserung der Kühleffektivität kann dadurch erreicht werden, daß die Kühlleistung abhängig von der Wärmekapazität und/oder der Wärmeleitfähigkeit und/oder der Dichte des Extrudats geregelt wird. Zur Regelung der mittleren Temperatur des Extrudats kann ein in die Regelung implementiertes Berechnungsprogramm, zur Regelung des Kühlkreislaufs, verwendet werden. Insbesondere erweist es sich als vorteilhaft, eine mittlere reproduzierbare Extrudattemperatur zu erreichen. Dies hat zur Folge, daß auch auftretende Schrumpfungsprozesse reproduzierbar verlaufen. Es werden hierdurch eine zu große Kühlung und damit ein unnötig großer Energieeinsatz vermieden. Durch die Regelung wird der produktspezifische Kühlbedarf in Abhängigkeit von der Oberflächentemperatur erfaßt und unter Berücksichtigung der materialspezifischen Daten geregelt.

Eine weitere Verbesserung des Regelungsprinzips kann dadurch erreicht werden, daß die Kühlleistung abhängig von der Transportgeschwindigkeit des Extrudats geregelt wird. Die Transportgeschwindigkeit ergibt sich aus der Geschwindigkeit, mit der ein vor der Kühlstrecke angeordneter Extruder das Extrudat bei vorgegebener Austrittstemperatur durch das zugehörige Werkzeug befördert. Bei einer zunehmenden Transportgeschwindigkeit, die insbesondere durch eine zunehmende Drehzahl des Extruders vorgegeben wird, nimmt die Austrittstemperatur des Extrudats zu. Die Transportgeschwindigkeit ist umgekehrt proportional zur Verweilzeit des Extrudats in der Kühlstrecke und beeinflußt somit dem Abkühlprozeß.

Ebenfalls ist daran gedacht, daß das Extrudat wenigstens bereichsweise mit Kühlgas unterschiedlicher Temperatur beaufschlagt wird. Die Verwendung von Kühlgas unterschiedlicher Kühltemperatur führt zu einer unterschiedlichen Kühlleistung in den einzelnen Kühlmodulen. Durch eine geeignete Auswahl der jeweiligen Kühltemperatur kann der Wirkungsgrad der Kühlung erhöht werden. Insbesondere ist daran gedacht, in jedem Einzelkühlmodul die Kühlgastemperatur individuell zu regeln. Es kann hierdurch eine produktspezifische Leistungsanpassung im Verlauf des Kühlungsvorgangs erfolgen.

Gemäß einer weiteren Ausführungsvariante ist daran gedacht, daß die Kühltemperatur des Kühlgases in Transportrichtung des Extrudats geringer wird. In Abhängigkeit vom Wärmeübertragungsverhalten und der Transportgeschwindigkeit kann die Temperatur des Kühlmediums innerhalb der Kühlmodule angepaßt werden. Die Anpassung erfolgt optimiert in Durchlaufrichtung des Extrudats, da sich hierdurch die geringste Mittentemperatur ergibt.

Gemäß einer weiteren Ausführungsform wird das Kühlgas zumindest bereichsweise mit unterschiedlichen Strömungsgeschwindigkeiten auf das Extrudat geleitet. Auch hierdurch erfolgt innerhalb der einzelnen Kühlmodule eine Anpassung des Kühlverhaltens in Abhängigkeit von der Strömungsgeschwindigkeit des Kühlmediums. Es ist aus energetischer Sicht sowie zur Erzielung eines gleichmäßigen Temperaturprofils besonders vorteilhaft, zu Beginn der Kühlstrecke eine hohe Wärmeübertragung (Wärmeübergangskoeffizienten), beispielsweise durch einen hohen Volumenstrom, zu realisieren, während die Kühllufttemperatur in Durchlaufrichtung des Extrudats gekühlt wird.

Ebenfalls ist daran gedacht, daß das Kühlgas mit einer variablen Strömungsgeschwindigkeit auf das Extrudat auftrifft. Es erweisen sich Strömungsgeschwindigkeiten bis zu 45 Meter/Sekunde als vorteilhaft, wenn als Kühlmedium Luft gewählt wird.

Die Anströmgeschwindigkeit des Kühlgases auf das Extrudat beeinflußt direkt den Wärmeübergang und steuert somit den Wärmetransport vom Material in die Umgebung. Als besonders vorteilhaft erweist es sich, zunächst einen hohen Wärmeübergang und anschließend einen geringeren Wärmeübergang zu wählen. Hierdurch wird eine hohe Kühlleistung hervorgerufen. Die Anpassung erfolgt wiederum optimiert in Durchlaufrichtung des Extrudats. Es ist aus energetischer Sicht sowie zur Erzielung eines gleichmäßigen Temperaturprofils besonders vorteilhaft, zu Beginn der Kühlstrecke eine hohe Wärmeübertragung (Wärmeübergangskoeffizienten), beispielsweise durch einen hohen Volumenstrom, zu realisieren, während die Kühllufttemperatur in Durchlaufrichtung des Extrudats gekühlt wird.

Eine weitere Ausführungsvariante bezieht sich darauf, daß ein regelbares Kühlmediumvolumen im Kreislauf zur Erzeugung unterschiedlicher Strömungsgeschwindigkeiten verwendet wird. Die unterschiedlichen Kühlmediumvolumen im Kreislauf beeinflussen ebenfalls die Anströmgeschwindigkeit des Kühlgases / Kühlmediums auf das Extrudat und hiermit den Wärmeübergang. Zur Vorgabe der regelbaren Strömungsgeschwindigkeit des Kühlmediums kann eine Vorgabe der Drehzahl der verwendeten Ventilatoren genutzt werden.

Zur weiteren Optimierung des Kühlverhaltens wird vorgeschlagen, daß im Bereich mindestens einer der Abschnitte der Kühlstrecke die Kühlleistung vorgebbar ein- und ausschaltbar ist. Es wird hierdurch ein sehr einfacher mechanischer und elektrischer Aufbau bereitgestellt, der unter Verwendung eines polumschaltbaren Motors realisiert werden kann. In Abhängigkeit von den jeweils gegebenen Anwendungsbedingungen können hierdurch eines oder mehrere der hintereinander angeordneten Kühlmodule zu- bzw. abgeschaltet werden. Es erfolgt somit eine konfigurierbare Vorgabe der Kühlleistung zur Optimierung der eingesetzten Kühlenergie.

Ebenfalls ist daran gedacht, daß die Kühlleistung derart geregelt wird, daß eine Oberflächentemperatur des Extrudats in demjenigen Kühlmodul, das in Transportrichtung als letztes vom Extrudat durchlaufen wird, unabhängig von der Geometrie des Extrudates konstant/dem Profil entsprechende Oberflächentemperatur gehalten wird.

Eine weitere Ausführungsvariante besteht darin, daß die Mittentemperatur und/oder die mittlere Temperatur an einer dicksten Stelle des Extrudats in demjenigen Modul, das in Transportrichtung zuletzt vom Extrudat durchlaufen wird, unabhängig von der Extrudatgeometrie konstant gehalten wird.

Ebenfalls ist daran gedacht, daß das Kühlgut von oben und unten und somit beidseitig gleichmäßig durch eine Bedüsung in den Kühlräumen gekühlt wird. Es werden hierzu oberhalb und unterhalb des Extrudats Kühldüsen angeordnet, die das Extrudat gleichmäßig bedüsen. Dieser Vorgang wird je Kühlmodul in zwei Ebenen bei gegenläufigem Durchlauf wiederholt. Durch eine beidseitige Bedüsung kann eine sehr hohe Wärmemenge abtransportiert werden, da der Wärmeaustausch über zwei Flächen erfolgt.

Eine weitere Ausführungsvariante besteht darin, daß Transportbänder mit offener Querschnittkonfiguration als Verteiler für das ausströmende Kühlgas verwendet werden. Das Extrudat wird hierbei auf luftdurchlässigen endlos umlaufenden Transportbändern durch die Kühlmodule transportiert. Durch Aussparungen in den Transportbändern strömt das Kühlmedium unter Druck in Richtung auf das Extrudat. Durch die Bewegung des Transportbandes in horizontaler Richtung und durch die vertikale Ausströmung des Kühlgases aus den Düsen entsteht ein Kernstrahl bzw. Turbulenz, die einen besonders hohen Wärmeaustausch begünstigt.

Es erweist sich als konstruktiv vorteilhaft, insbesondere bei Luft, daß runde Ausströmöffnungen der Kühldüsen mit einem Durchmesser von 3 bis 5 Millimetern versehen werden. Insbesondere erweist es sich als vorteilhaft, die Kühldüsen in unregelmäßiger Verteilung über der Düsenfläche mit unregelmäßigen Durchmessern zu versehen. Eine vorteilhafte Ausströmung des Kühlmediums aus den Kühldüsen liegt im Bereich von 40 bis 45 Meter/Minute.

Zur Vermeidung von Energieverlusten ist vorgesehen, daß der Kühlraum durch seitliche Wände begrenzt und im wesentlichen zur Umgebung abgedichtet ist.

Eine besonders kompakte Ausführungsform wird dadurch bereitgestellt, daß die Kühlräume unmittelbar aneinander gereiht sind. Es wird hierdurch vermieden, daß das Extrudat in Kontakt mit einer Umgebungsluft kommt, die zu einer Aufheizung oder Feuchtigkeitsaufnahme führen könnte.

Eine weitere Ausführungsvariante besteht darin, daß die Kühldüsen der oberen Etage innerhalb des Kühlmoduls unabhängig von den Kühldüsen in der unteren Etage ansteuerbar sind. Es kann hierdurch eine weitere Optimierung der Kühlleistung erfolgen. Das jeweilige Luftvolumen kann beispielsweise durch Blenden vor den Kühldüsen eingestellt werden.

Als Sensor zur Ermittlung der Oberflächentemperatur des Extrudats kann beispielsweise ein Infrarotthermometer eingesetzt werden. Zur automatisierten Durchführung der Regelungsvorgänge erweist es sich als zweckmäßig, daß alle Rezepturwerte in einer Steuereinheit abgelegt sind. Jedem Rezeptwert ist hierbei ein spezifischer Abkühlprozeß zugeordnet. Die Rezepturwerte umfassen Materialwerte, die Extrudatgeometrie, die Transportgeschwindigkeit des Extrudats sowie die Austrittstemperatur des Extrudats am Ausgang des Extrusionswerkzeuges.

In den Zeichnungen sind Ausführungsbeispiele der Erfindung schematisch dargestellt. Es zeigen:
- Fig. 1: eine Seitenansicht einer Anlage zur Reifenherstellung, die mit einem Extruder zur Herstellung eines elastomeren Extrudats sowie einer Kühlstrecke für das Extrudat versehen ist,
- Fig. 2: eine schematische Darstellung eines Vertikalschnittes durch einen im Bereich der Kühlstrecke angeordneten im wesentlichen geschlossenen Kühlraum,
- Fig. 3: eine schematische Darstellung einer Vorrichtung zur einseitigen Kühlung eines Extrudats,
- Fig. 4: eine schematische Darstellung zur Veranschaulichung einer zweiseitigen Kühlung eines Extrudats,
- Fig. 5: eine schematische Darstellung einer Mehrzahl aneinander gereihter Kühlmodule mit Temperaturerfassung im Ausgangsbereich,
- Fig. 6: eine schematische Darstellung zur individuellen Regelung der Kühlleistung in den einzelnen Kühlmodulen,
- Fig. 7: ein Beispiel für eine Querschnittgeometrie des Extrudats,

- Fig. 8: eine andere Ausführungsform für ein Querschnittprofil des Extrudats,
- Fig. 9: eine Skizze zur veranschaulichung der Düsenanordnung in einem Kühlmodul.

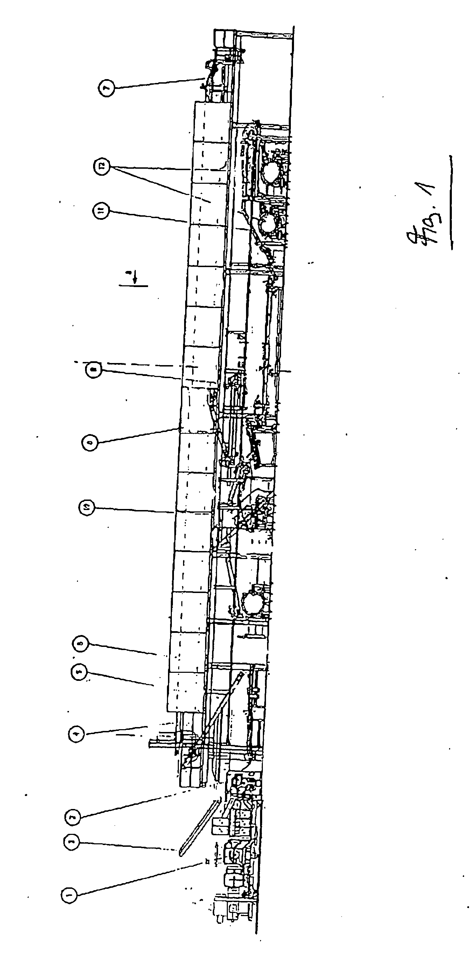

Eine Anlage zur Herstellung von Reifen gemäß Fig. 1 umfaßt einen oder mehrere Extruder (1), einen Kalander (2) sowie eine Fördereinrichtung (3). Die Fördereinrichtung (3) transportiert im Bereich des Kalanders (2) vom Extrudat abgeschnittene Randstreifen erneut zum Extruder (1), um eine Wiederverarbeitung zu ermöglichen.

Über eine weitere Fördereinrichtung (4) wird das Extrudat zu einer Fördereinrichtung (5) transportiert, die das Extrudat in Richtung auf eine Kühlstrecke (6) weiterleitet. Das Extrudat durchläuft dann die Kühlstrecke (6) über deren gesamte Länge bis in den Bereich einer Regelschwinge (7), durch die das Extrudat umgelenkt wird und die Längenänderungen des Extrudat durch eine Kontraktion als Folge der Abkühlung ausgleicht. Auf einem relativ zum ersten Niveau niedrigeren Höhenniveau durchläuft das Extrudat dann nochmals wenigstens einen Teil der Kühlstrecke (6) und wird von einer Fördereinrichtung (8) zu einer Laminiereinrichtung (9) geleitet. Die Laminiereinrichtung (9) steht mit einer Abwickelvorrichtung (10) in Verbindung, die ein verwendetes Laminat bereitstellt. Über eine Fördereinrichtung (11) wird das laminierte Extrudat dann zu Einwickelvorrichtungen (12) transportiert.

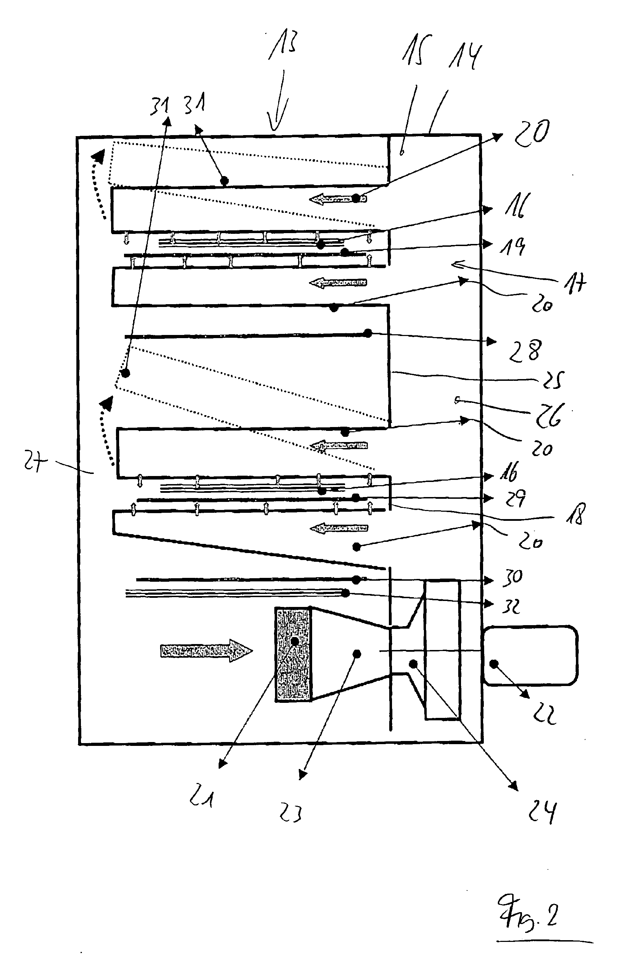

Fig. 2 zeigt ein im Bereich der Kühlstrecke (6) angeordnetes Kühlmodul (13), das einen von einem Gehäuse (14) im wesentlichen umschlossenen Kühlraum (15) aufweist. Durch den Kühlraum (15) wird das Extrudat (16) im Bereich eines ersten oberen Durchlaufes (17) sowie im Bereich eines zweiten unteren Durchlaufes (18) hindurchgeführt. Das Extrudat (16) liegt im Bereich des Kühlraumes (15) auf einem Tragelement (19) auf, das vorzugsweise als umlaufendes Transportelement ausgebildet ist. Insbesondere ist daran gedacht, das Tragelement (19) förderbandartig zu konstruieren, wobei die bandartige Konstruktion durch flächige Kettensegmente bereitgestellt ist.

Entlang des Transportweges des Extrudates (16) durch den Kühlraum (15) sind eine Mehrzahl von Kühldüsen (20) angeordnet. Insbesondere ist daran gedacht, eine Mehrzahl von Kühldüsen (20) reihenartig zu positionieren. Bei dem in Fig. 2 dargestellten Ausführungsbeispiel erfolgt eine zweitseitige Kühlung des Extrudates (16) sowohl von oben als auch von unten. Die Kühlung von unten wird von Ausnehmungen im Bereich des Tragelementes (19) hindurch vorgenommen.

Zur Kühlung des innerhalb des Kühlraumes (15) befindlichen Kühlgases wird ein Wärmetauscher (20) eingesetzt, entlang dessen Wärmeübertragungsflächen das Kühlgas durch die ventilatorische Wirkung eines Lüfterrades (24) gesaugt wird. Das Kühlgas durchläuft zunächst den Wärmetauscher (21) und anschließend einen Vorverteiler (23). Danach gelangt das Kühlgas in den Bereich des von einem Motor angetriebenen Lüfterrades (24), das einen erforderlichen Gasdruck für die Versorgung der Kühldüsen (20) bereitstellt.

Gemäß der Ausführungsform in Fig. 2 ist das Kühlmodul (13) durch eine Innenwand (25) in einen Zuströmraum (26) sowie einen Abströmraum (27) unterteilt. Durch den Zuströmraum (26) hindurch wird das auf Kühltemperatur heruntergekühlte Kühlgas den Kühldüsen (20) zugeführt. Nach einer Beaufschlagung des zu kühlenden Extrudates (16) strömt das Kühlgas durch den Abströmraum (27) hindurch erneut zum Wärmetauscher (21).

Gemäß der in Fig. 2 dargestellten Ausführungsform ist das im Bereich des oberen Durchlaufes (17) angeordnete Tragelement (19) mit einem innerhalb des Abströmraumes (27) verlaufenden Rücklauf (28) versehen, um einen geschlossenen Umlaufweg zu ermöglichen. Im Bereich des unteren Durchlaufes (18) ist ein weiteres Tragelement (29) angeordnet, das ebenfalls zur Bereitstellung eines geschlossenen Umlaufweges einen Rücklauf (30) aufweist. Grundsätzlich ist es ebenfalls denkbar, das Tragelement (19) und das Tragelement (29) als ein einheitliches Bauelement auszubilden und somit einen Vierfachdurchlauf durch das Kühlmodul (13) zu realisieren. Die Wahl der konkreten konstruktiven Realisierung erfolgt in Abhängigkeit von den jeweiligen Anwendungsanforderungen, insbesondere in Abhängigkeit von der Länge der zu durchlaufenden Transportwege.

Gemäß der Ausführungsform in Fig. 2 sind die im Bereich des oberen Durchlaufes (17) und des unteren Durchlaufes (18) jeweils angeordneten oberen Düsen (20) verschwenkbar positioniert und lassen sich jeweils in eine Serviceposition (31) hochklappen. In dieser Positionierung ist der jeweilige Hinlaufbereich der Tragelemente (19, 29) für Service- und Wartungsarbeiten zugänglich.

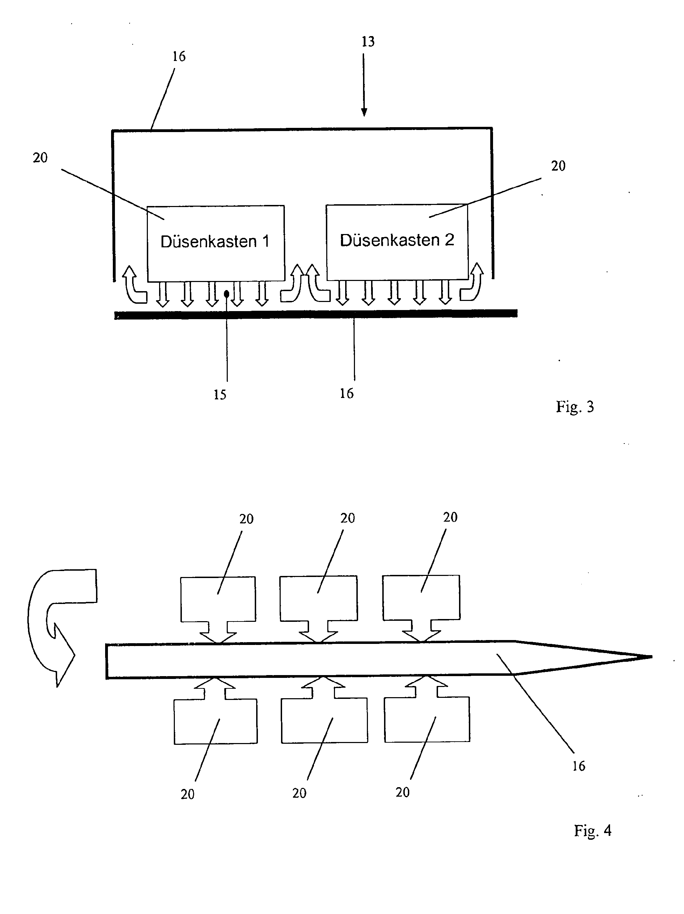

Fig. 3 veranschaulicht die Anordnung einer Mehrzahl von Kühldüsen (20) entlang des Extrudats (16). Es ist insbesondere erkennbar, daß die Kühldüsen (20) mit einem optimierten Abstand in Abhängigkeit vom Düsendurchmesser zum Extrudat (16) angeordnet werden. Hierdurch wird eine Prallstrahlbedüsung zur Erreichung einer effektiven Wärmeübertragung realisiert. Es werden ein definierter Kernstrahl und eine definierte Austrittsgeschwindigkeit der Kühlluft aus den Kühldüsen (20) heraus erreicht.

Fig. 4 veranschaulicht eine relativ zum Extrudat (16) zweiseitige Anordnung von Kühldüsen (20). Es wird hierdurch sowohl im Bereich einer Oberseite als auch im Bereich einer Unterseite des Extrudats eine Kühlwirkung erreicht, so daß die erforderliche Kühlzeit verringert werden kann.

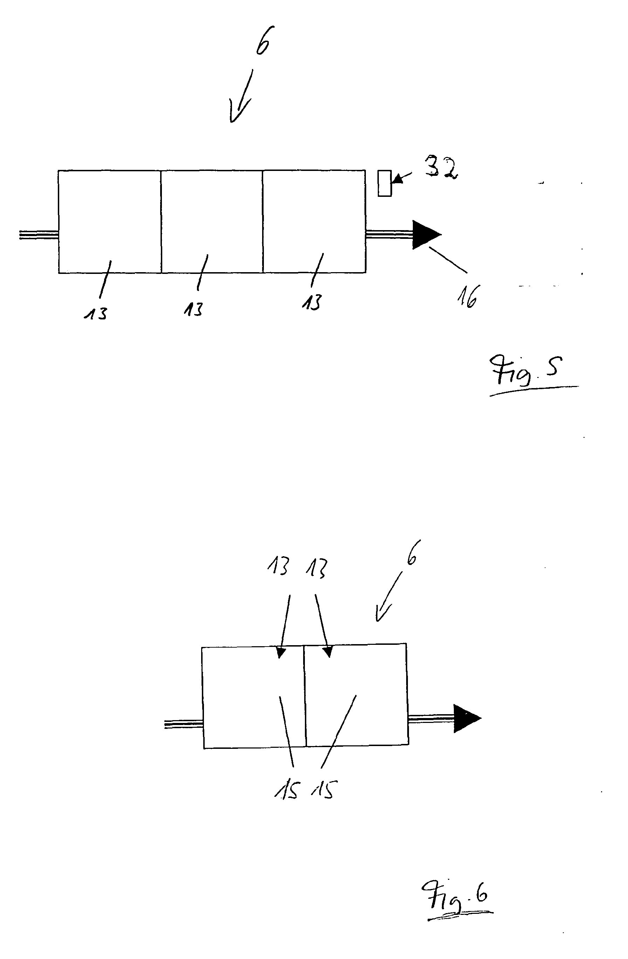

Fig. 5 zeigt eine Mehrzahl hintereinander angeordneter Abschnitte einer Kühlstrecke in Form von Kühlmodulen (13) zur Ausbildung der Kühlstrecke (6). Im Bereich eines Ausganges der Kühlstrecke (6) ist ein Sensor (32) zur Temperaturerfassung angeordnet. Der Sensor (32) erfaßt vorzugsweise eine Oberflächentemperatur des Extrudats (16).

Fig. 6 veranschaulicht zwei hintereinander angeordnete Kühlmodule (13), in deren Kühlräumen (15) unterschiedliche Kühlleistungen realisiert sind. Die unterschiedlichen Kühlleistungen können durch unterschiedliche Temperaturen des Kühlmediums, unterschiedliche Volumenströme des Kühlmediums, unterschiedliche Strömungsgeschwindigkeiten oder geeignete Strömungsführungen erreicht werden.

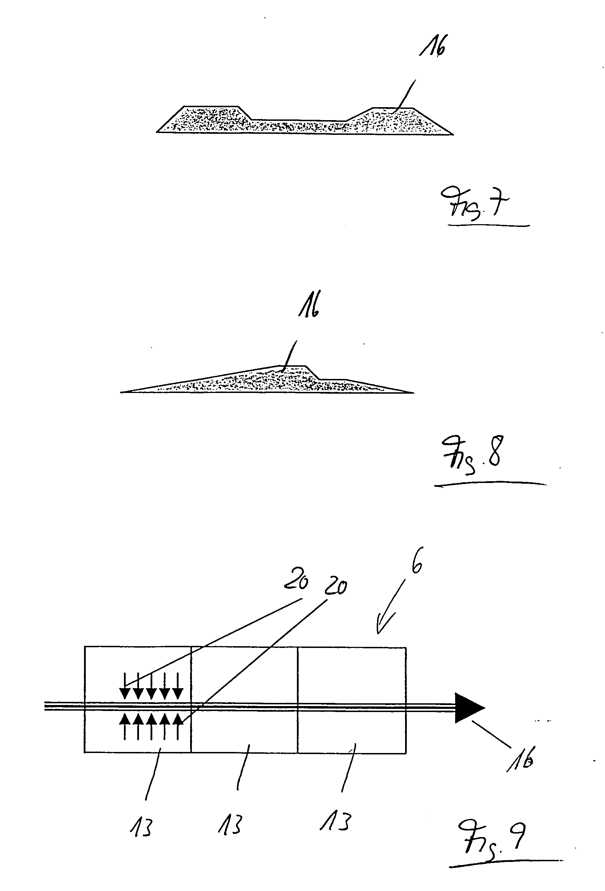

Fig. 7 und Fig. 8 veranschaulichen unterschiedliche Querschnittprofile des Extrudats (16). Die Kühlleistung kann in Abhängigkeit von der jeweiligen Querschnittgeometrie des Extrudats (16) gewählt werden. Insbesondere ist es auch möglich, innerhalb der einzelnen Kühlmodule (13) die Kühlintensität quer zur Transportrichtung des Extrudats (16) in Abhängigkeit von der jeweiligen Querschnittgeometrie vorzugeben, um hierdurch eine weitere Optimierung der Wärmeübertragung zu erreichen.

Fig. 9 veranschaulicht die Anordnung der Kühldüsen (20) innerhalb der Kühlmodule (13). Insbesondere ist zu erkennen, daß eine beidseitige Bedüsung des Extrudats (16) mit Kühlgas erfolgt. Die Bedüsung kann gleichmäßig oder entsprechend einem vorgegebenen Steuerungskonzept hinsichtlich der oberen und unteren Kühldüsen (20) unterschiedlich erfolgen.

Die vorstehend verwendete Bezeichnung Kühlgas wurde zur sprachlichen Vereinfachung als Sammelbegriff für jedes denkbare Kühlmedium verwendet. Alternativ zu den jeweils konkret beschriebenen Verwendungen von Kühlgas als Kühlmedium ist bei allen Ausführungsvarianten alternativ auch die Verwendung von Wasser, Mischungen wie beispielsweise Sole, Luft, anderen Gasen sowie Öl möglich. Die Kühlung kann direkt oder über Wärmeleitung erfolgen. Als Wärmeleiter kommen beispielsweise Trommeloberflächen oder Stahlbandoberflächen in Frage.

Ebenfalls wurde vorstehend bei allen Ausführungsbeispielen der Begriff Kühlstrecke lediglich sprachlich vereinfacht verwendet und umfaßt alle Varianten zur Erzielung sowohl einer freien Konvektion als auch einer erzwungenen Konvektion. Von Bedeutung ist lediglich, daß eine Kühlung des Extrudats erfolgt.

Eine Anwendung der vorstehend erläuterten Regelungsverfahren kann bei allen Kühlstrecken vorgesehen werden. Insbesondere ist es möglich, Kühlungen durch Sprühkühlungen, Trommelkühlungen, Stahlbandkühlungen oder Tauchkühlungen zu erzielen. Grundsätzlich können auch beliebige Kombinationen der vorstehend aufgeführten Kühlverfahren zur Anwendung kommen.

Ein Transport des Extrudats durch die Kühleinrichtung kann unter Verwendung beliebiger Transportvorrichtungen erfolgen. Die erläuterten Tragelemente stellen lediglich ein Ausführungsbeispiel dar.

Hinsichtlich der zur Realisierung der Kühlung des Extrudats ebenfalls anwendbaren Trommelkühlverfahren ist zu berücksichtigen, daß bei einer derartigen Trommelkühlung das Extrudat über eine von Kühlmedium durchflossene Trommel transportiert wird. Typischerweise sind mehrere derartige Kühltrommeln hintereinander angeordnet. Die Anordnung hintereinander bezieht sich hierbei auf die Transportrichtung des Extrudats. Vier Kühltrommeln müssen somit nicht linear hintereinander angeordnet sein, sondern es ist beispielsweise hinsichtlich der jeweiligen Trommellängsachsen eine Anordnung möglich, bei der die Längsachsen eine rechteckförmige Querschnittfläche aufspannen. Bei einer derartigen Anordnung liegt das Extrudat bei der ersten Kühltrommel auf der ersten Extrudatoberfläche auf, und wird bei der in Transportrichtung zweiten Trommel auf der gegenüberliegenden Fläche gekühlt. Durch die entsprechende Führung des Extrudats entlang der Kühltrommeln kann somit eine beidseitige Kühlung des Extrudats realisiert werden.

## Patentansprüche

1. Verfahren zum Kühlen von Extrudaten, bei dem das Extrudat von mindestens einer Transportvorrichtung durch eine Kühlstrecke transportiert wird, wobei das Extrudat über ein Kühlgas gekühlt wird, **dadurch gekennzeichnet, daß** das Kühlgas einem Wärmetauscher zugeführt wird und anschließend wieder zur Kühlung des Extrudats in mindestens einem Abschnitt der Kühlstrecke verwendet wird.

2. Verfahren nach Anspruch 1, **dadurch gekennzeichnet, daß** das Kühlgas durch Kühldüsen (20) hindurch in Richtung auf das Extrudat (16) geleitet wird.

3. Verfahren nach Anspruch 1 oder 2, **dadurch gekennzeichnet, daß** die Kühldüsen (20) reihenartig angeordnete und im wesentlichen mit einem runden Querschnitt versehene Ausströmöffnungen aufweisen.

4. Verfahren nach einem der Ansprüche 1 bis 3, **dadurch gekennzeichnet, daß** das Extrudat den Kühlraum (15) mindestens bereichsweise sowohl entlang eines Hinweges als auch entlang eines Rückweges durchläuft.

5. Verfahren nach Anspruch 4, **dadurch gekennzeichnet, daß** der Hinweg und der Rückweg in lotrechter Richtung mindestens bereichsweise übereinander durchlaufen werden.

6. Verfahren nach einem der Ansprüche 1 bis 5, **dadurch gekennzeichnet, daß** das Extrudat (16) mindestens bereichsweise zweiseitig gekühlt wird.

7. Verfahren nach einem der Ansprüche 1 bis 6, **dadurch gekennzeichnet, daß** mindestens eine der Kühldüsen (20) verschwenkbar innerhalb des Kühlraumes (15) positioniert wird.

8. Verfahren nach einem der Ansprüche 1 bis 7, **dadurch gekennzeichnet, daß** die Kühldüsen (20) über einen Strömungsweg mit einem Druckerzeuger für das Kühlgas verbunden werden.

9. Verfahren nach einem der Ansprüche 1 bis 8, **dadurch gekennzeichnet, daß** das Extrudat mindestens bereichsweise im Bereich seiner Oberfläche auf eine Temperatur unterhalb einer vorgesehenen Endtemperatur gekühlt wird und daß die Oberflächentemperatur anschließend durch innerhalb des Extrudats (16) gespeicherte Restwärme wieder angehoben wird.

10. Verfahren nach einem der Ansprüche 1 bis 9, **dadurch gekennzeichnet, daß** eine Mehrzahl von Kühlmodulen (13) in Transportrichtung des Extrudats (16) hintereinander angeordnet werden.

11. Verfahren nach einem der Ansprüche 1 bis 10, **dadurch gekennzeichnet, daß** das Extrudat (16) von einem umlaufenden Tragelement (19) durch den Kühlraum (15) transportiert wird.

12. Verfahren nach einem der Ansprüche 1 bis 11, **dadurch gekennzeichnet, daß** ein Rücklaufbereich des Tragelementes (19, 29) mindestens bereichsweise gekühlt wird.

13. Verfahren nach einem der Ansprüche 1 bis 12, **dadurch gekennzeichnet, daß** eine Temperatur des Extrudats (16) im Bereich mindestens einer Erfassungsstelle gemessen und die Meßwerte einer Regelung zur Vorgabe einer Kühlleistung zugeführt werden.

14. Verfahren nach einem der Ansprüche 1 bis 13, **dadurch gekennzeichnet, daß** das Extrudat (16) innerhalb einer Anlage zur Gummiextrusion gekühlt wird.

15. Verfahren nach einem der Ansprüche 1 bis 13, **dadurch gekennzeichnet, daß** das Extrudat (16) innerhalb einer Anlage zur Reifenherstellung gekühlt wird.

16. Verfahren nach einem der Ansprüche 1 bis 15, **dadurch gekennzeichnet, daß** die Wärmeübertragungsrate in mindestens einem Bereich der Kühlstrecke (6) in Abhängigkeit von einer meßtechnisch erfaßten Temperatur des Extrudats (16) geregelt wird.

17. Verfahren nach einem der Ansprüche 1 bis 15, **dadurch gekennzeichnet, daß** die Wärmeübertragungsrate in mindestens einem Bereich der Kühlstrecke (6) in Abhängigkeit von mindestens einem Rezeptwertes des Extrudats (16) geregelt wird.

18. Verfahren nach einem der Ansprüche 1 bis 17, **dadurch gekennzeichnet, daß** in mindestens zwei Bereichen entlang der Kühlstrecke (6) das Extrudat (16) mit unterschiedlicher Wärmeübertragungsrate gekühlt wird.

19. Verfahren nach einem der Ansprüche 1 bis 18, **dadurch gekennzeichnet, daß** die Wärmeübertragungsrate in mindestens einem Bereich der Kühlstrecke (6) in Abhängigkeit von einem Betriebsparameter der Kühlstrecke (6) geregelt wird.

20. Vorrichtung zum Kühlen von Extrudaten, die mindestens ein das Extrudat stützendes Tragelement aufweist, das durch eine Kühlstrecke geführt ist und bei der im Bereich der Kühlstrecke eine Mehrzahl von Kühldüsen zur Leitung eines Kühlgases in Richtung auf das Extrudat angeordnet sind, **dadurch gekennzeichnet, daß** die Kühlstrecke (6) mindestens bereichsweise innerhalb eines im wesentlichen geschlossenen Kühlraumes (15) angeordnet ist und daß der Kühlraum (15) mit einem Wärmetauscher (21) gekoppelt sowie mit einer Gasfördereinrichtung (24) versehen ist.

21. Vorrichtung nach Anspruch 20, **dadurch gekennzeichnet, daß** im Bereich der Kühlstrecke (16) eine Mehrzahl von Kühldüsen (20) angeordnet sind.

22. Vorrichtung nach Anspruch 20 oder 21, **dadurch gekennzeichnet, daß** mindesten eine der Kühldüsen (20) reihenartig angeordnete und im wesentlichen runde Ausströmöffnungen aufweist.

23. Vorrichtung nach einem der Ansprüche 20 bis 22, **dadurch gekennzeichnet, daß** die Kühldüsen (20) Ausströmöffnungen mit einer Querschnittgestaltung und Anordnung zur Realisierung einer Prallstrahlbedüsung aufweisen.

24. Vorrichtung nach einem der Ansprüche 20 bis 23, **dadurch gekennzeichnet, daß** die Kühlstrecke (6) sowohl einen Hinlaufweg als auch einen Rücklaufweg für das Extrudat (16) aufweist.

25. Vorrichtung nach Anspruch 24, **dadurch gekennzeichnet, daß** der Hinlaufweg und der Rücklaufweg übereinander angeordnet sind.

26. Vorrichtung nach einem der Ansprüche 20 bis 25, **dadurch gekennzeichnet, daß** mindestens zwei Kühldüsen (20) entlang von zwei einander gegenüberliegenden Seiten des Extrudats (16) angeordnet sind.

27. Vorrichtung nach einem der Ansprüche 20 bis 26, **dadurch gekennzeichnet, daß** mindestens eine der Kühldüsen (20) verschwenkbar innerhalb des Kühlraumes (15) angeordnet ist.

28. Vorrichtung nach einem der Ansprüche 20 bis 27, **dadurch gekennzeichnet, daß** die Kühldüsen (20) an einen Druckerzeuger für die Kühlluft angeschlossen sind.

29. Vorrichtung nach einem der Ansprüche 20 bis 28, **dadurch gekennzeichnet, daß** eine Mehrzahl von Kühlmodulen (13) in Transportrichtung des Extrudates (16) hintereinander angeordnet sind.

30. Vorrichtung nach einem der Ansprüche 20 bis 29, **dadurch gekennzeichnet, daß** das Tragelement (19, 29) umlaufend geführt ist.

31. Vorrichtung nach einem der Ansprüche 20 bis 30, **dadurch gekennzeichnet, daß** ein Rücklauf (28, 30) des Tragelementes (19, 29) mindestens bereichsweise von einem Kühlmedium beaufschlagt ist.

32. Vorrichtung nach einem der Ansprüche 20 bis 31, **dadurch gekennzeichnet, daß** entlang des Tragelementes (19, 29) mindestens ein Sensor zur Erfassung einer Temperatur des Extrudats (16) angeordnet ist.

33. Vorrichtung nach Anspruch 32, **dadurch gekennzeichnet, daß** der Sensor an eine Regelung für eine Kühlleistung des Kühlmoduls (13) angeschlossen ist.

34. Vorrichtung nach einem der Ansprüche 20 bis 33, **dadurch gekennzeichnet, daß** das Kühlmodul (13) als Teil einer Anlage zur Gummiextrusion ausgebildet ist.

35. Vorrichtung nach einem der Ansprüche 20 bis 33, **dadurch gekennzeichnet, daß** das Kühlmodul (13) als Teil einer Anlage zur Reifenherstellung ausgebildet ist.
